# EUROPEAN PATENT SPECIFICATION

(11) **EP 1 238 321 B1**
(45) Date of publication and mention of the grant of the patent: **15.04.2009**
(21) Application number: 00981109.2
(22) Date of filing: 28.11.2000
(51) Int. Cl.: G06F 1/00

(54) **METHOD AND SYSTEM FOR GENERATING A SECURE ELECTRONIC SIGNATURE**
VERFAHREN UND SYSTEM ZUM ERZEUGEN EINER SICHEREN ELEKTRONISCHEN UNTERSCHRIFT
PROCEDE ET SYSTEME PERMETTANT DE GENERER UNE SIGNATURE ELECTRONIQUE SURE

(30) Priority: 09.12.1999 US 169771 P
(43) Date of publication of application: 11.09.2002
(73) Proprietor: Silanis Technology Inc., St-Laurent, Quebec H4T 1V3 (CA)
(72) Inventor: SILVESTER, Joseph, Dollard des Ormeaux, Quebec H9G 1W1 (CA)
(74) Representative: Thévenet, Jean-Bruno
(86) International application number: PCT/CA2000/001410
(87) International publication number: WO 2001/042885

(56) References cited:
- EP-A- 0 651 357
- US-A- 5 818 955

## Description

### FIELD OF THE INVENTION

The present invention relates to the field of electronic identification and electronic approval processes. More specifically, the invention concerns a method and system for creating personalized and secure electronic signature files using automated scanning systems.

### BACKGROUND OF THE INVENTION

Organizations and businesses are currently conducting many electronic transactions, and in such transactions user identification is a major concern. The most common identification tool used in paper based transactions is simply applying a signature on a given document. The signature identifies the user and indicates the signer's consent to the contents of the document.

In electronic transactions, it is possible to use similar methods using digitized hand written signatures. There are many electronic approval systems currently in use that allow the use of digitized hand written signatures to approve electronic documents.

Examples of such computer based systems and methods for capturing electronic signatures are known in the art. It is the case of US patent no. 5,818,955 (NEWMAN et al.), which discloses a method and system wherein a user signs an electronic document. The handwritten signature is electronically captured using a signature capture module for example a combination of pen, digitizer and display. Measurements related to the signature are stored with other optional data in an envelope. The envelope is encrypted and stored for later decryption and verification.

EP patent no. 0 651 357 (HOLLOWAY) is also known in the art and provides a transaction processing system generating a characteristic image such as an image of a user's signature obtained from a user's data stored in a data processing system. The system further comprises logic for generating a transaction message. The data processing system also comprises means to recover the characteristic data from the message and to reconstruct the characteristic image from the user data.

One of the major problems of the available systems is the creation of the electronic signatures. The most common method of generating an electronic hand written signature is through the use of digitizer pads or scanners. The electronic signature image is captured by such a device and then stored as an electronic file. However, in large organizations or corporations, every user does not necessarily have access to scanners or signature digitizers, making it difficult to generate these signature files. Furthermore, validation of the identity of the person using a signature file once generated is an issue. For example, some organizations have the users sign a signature card which is then scanned in by an employee to create the signature file. However, there is no guarantee the employee did not make additional copies of the signature. In this situation, the owner of the signature has no control over the creation of the electronic signature file.

### OBJECTS AND SUMMARY OF THE INVENTION

It is therefore an object of the present invention to provide an automated method and system for generating a secure electronic signature file.

Another object of the invention is to provide such a method and system where there is no need for a party other than the user to be involved in the signature file creation process.

Accordingly, the present invention provides a method for generating a secure digitized hand written signature file for a user, comprising the steps of:
a) generating an ID code associated with the user, said ID code being made accessible to a processing unit remote from said user;
b) generating a printed template having the ID code thereon;
c) having the user sign the template, thereby generating a user hand written signature sample;
d) transmitting the template to the processing unit;
e) matching the ID code on the template received at the processing unit to the ID code made accessible to said processing unit in step a);
f) digitizing the user hand written signature sample on the template received at the processing unit and storing said user hand written signature sample into a digitized hand written signature file; and
g) securing the digitized hand written signature file in such a manner that only the user has access thereto.
   The present invention also provides a system for generating a secure digitized hand written signature file for a user, comprising:
   a code generating application, for generating an ID code associated with said user, and making the ID code accessible to a processing unit remote from the user;
   a printer for generating a printed template having the ID code thereon, said template being signable by the user for generating a user hand written signature sample;
   a transmitter for transmitting the template to the remote processing unit;
   matching means for matching the ID code on the template received at the processing unit to the ID code made accessible thereto;
   a digitizer for digitizing the user hand written signature sample on the template received at the processing unit and storing it into a user signature image file and
   securing means for securing the digitized hand written signature file, in such a manner that only the user has access thereto.

The present invention and its advantages will be better understood upon reading the following non-restrictive description of embodiments thereof with reference to the accompanying drawings.

### BRIEF DESCRIPTION OF THE DRAWINGS

FIG. 1 is a flow chart showing a method for generating a secure electronic signature file according to a first embodiment of the invention.
FIG. 2A is a flow chart showing the steps performed at a user station of a method according to second embodiment of the invention; and FIG. 2B is a flow chart showing the steps performed at the processing unit of the method of FIG. 2A.
FIG. 3 is a flow chart showing a method for generating a secure electronic signature file according to a third embodiment of the invention.
FIG. 4A is a flow chart showing a user station application for a system according to a preferred embodiment of the invention; and FIG. 4B is a flow chart showing a processing unit application for the system of FIG. 4A.
FIG. 5 is a diagram showing a system for generating a secure signature file in accordance with a preferred embodiment of the present invention.

### DESCRIPTION OF PREFERRED EMBODIMENTS OF THE INVENTION

The present invention first concerns a method for generating a secure electronic signature file for a user. The method will be better understood upon reading the following descriptions of various preferred embodiments thereof.

### Description of the first embodiment of the method according to the invention

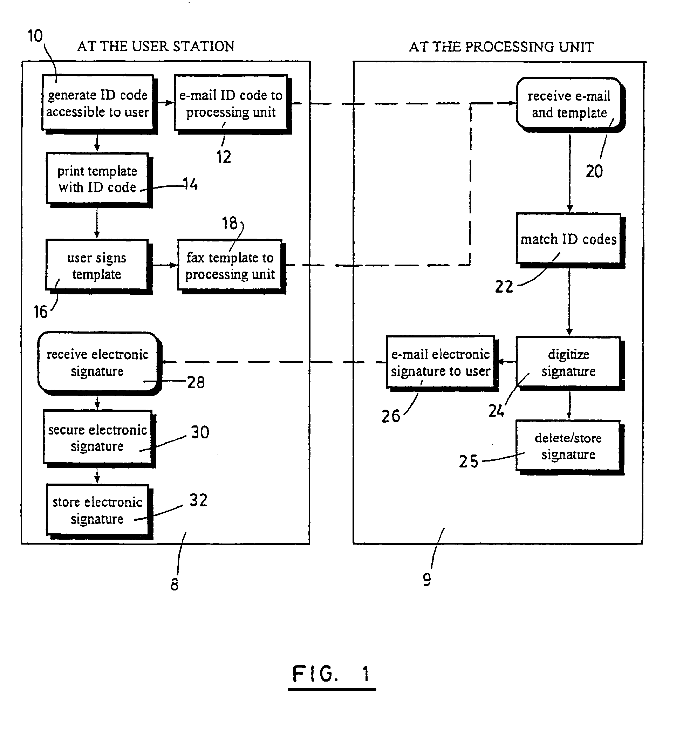

Referring to FIG. 1, there is shown a flow chart illustrating a first embodiment of the method according to the present invention. A portion 8 of the method is executed at the user station, and another portion 9 takes place at a processing unit remote from the user location.

The method includes a first step 10 of generating an ID code associated with the user. The ID code may be as simple as the user's name, or any other relevant identifying marker. In the preferred embodiment a bar code is used. The ID code is made available to the processing unit. In the present embodiment, this is achieved by sending an e-mail message to the processing unit with the ID code included therein 12.

A template having the ID code thereon is printed 14. The user then signs this template 16, which generates a user signature sample. A predetermined signature location may be provided on the template for this purpose. The template is in turn transmitted to the processing unit 18. In all the described embodiments a fax machine is used, but it is understood that any other secure manner of transmitting a printed sheet of paper could be used without departing from the scope of the invention.

At the processing unit, the template and message containing the ID code are received 20. The processing unit then matches the ID code appearing on the template to the ID code received in the e-mail message 22, thereby ensuring a proper identification of the user. The user signature sample is then digitized and stored into an electronic signature file 24. The processing may store the user signature on its end for future reference, or delete it 25.

In the present embodiment, the electronic signature file is directly sent back to the user via e-mail 26. Upon reception of the message at the user station 28, The file is secured to make sure that only the user has access thereto 30. The securing may be realized in a number of manners, such as encryption, setting a password, restricting access to biometric characteristics of the user, setting a voice or photo restricted access, or a combination of such means. The file is then ready for use, and may be stored at an appropriate location 32, such as the user's hard drive, the web, a network, floppy disks, PCMCIA cards, CD ROMs, magnetic strips, smart cards, etc.

### Description of the second embodiment of the method according to the invention

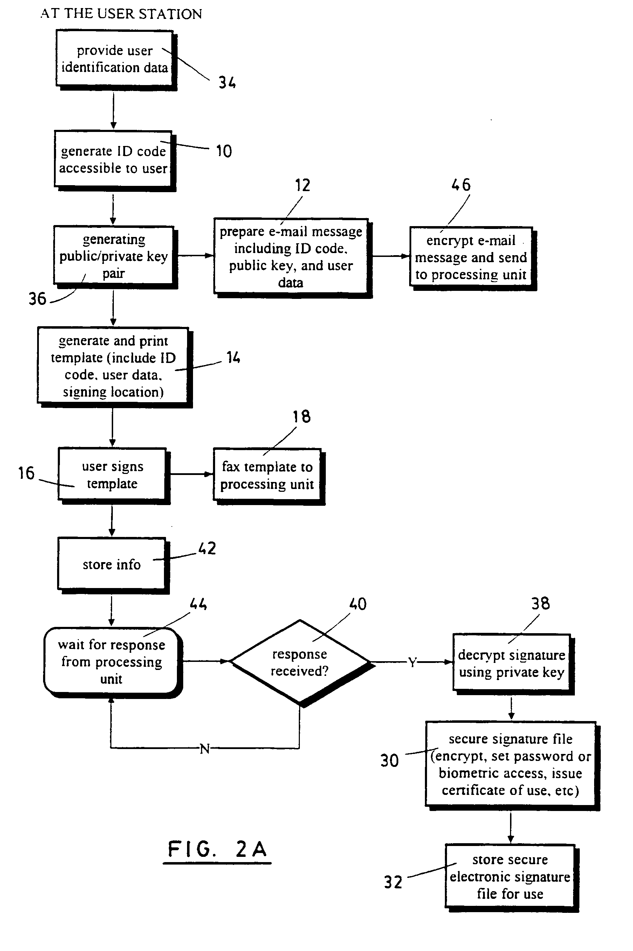

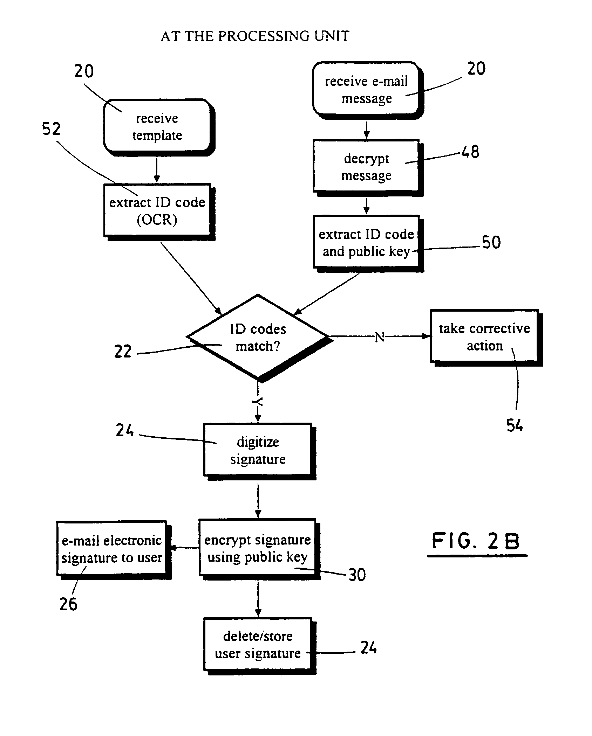

The first embodiment described above is a simple manner in which the invention may be realized, where the securing of the electronic signature file is done at the user station. It is also possible to have the securing done at the processing unit, or at both the user station and the processing unit. The second embodiment, illustrated on FiGs. 2A and 2B, illustrates the latter case.

In this embodiment, a step of providing user identification data 34 is executed before the ID code is generated 10. This data may serve to further identify the user and may consist of the name and title of the user, an address, etc. Preferably, the user identification data is included both on the printed template 14 and in the e-mail message to the processing unit 12, and stored with the electronic signature 34. The user identification data, ID code and any other relevant information may be stored locally at the user station 42 while waiting for the response from the processing unit 44.

Also in the embodiment, a private/public key pair is generated at the user station 36. The public key is then included in the e-mail message to the processing unit 12. In this manner, after the user signature has been digitized 24, the public key may be used by the processing unit to encrypt the signature file as part of the securing 30. The resulting file is therefore only decryptable using the private key, which only the user has access to. Steps of decrypting the signature 38 and afterwards securing it with further encryptions 30 are provided, but may be omitted to simply store the encrypted file as received from the processing unit 40.

Similarly, the processing unit may also have a private/public key pair, the public key being available to the user. In this manner, the e-mail message from the user station to the processing unit 12 may also be encrypted using the public key of the processing unit 46, and upon reception 20 be decrypted by the processing unit using its private key 48. The ID code and public key of the user may then be extracted therefrom 50, and compared 22 to the ID code extracted from the template 52, for example using OCR. Corrective actions are taken if the ID codes do not match 54.

### Description of the third embodiment of the method according to the invention

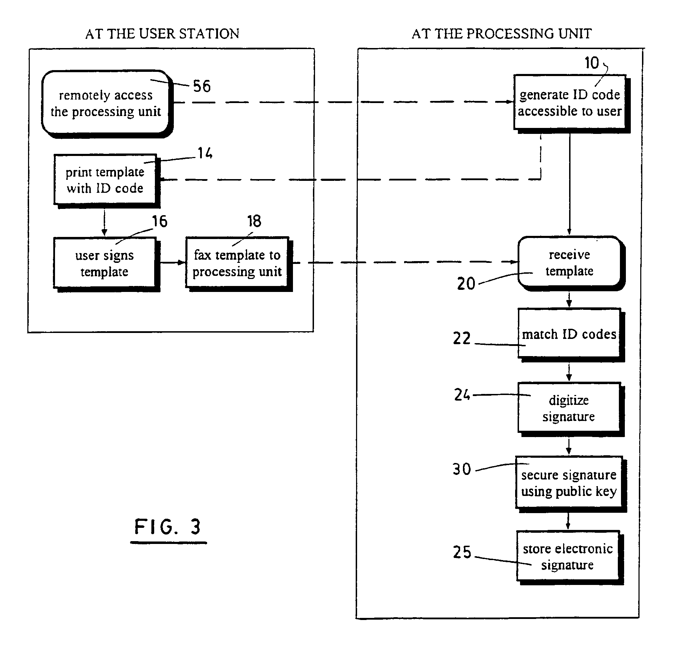

Referring to FIG. 3, there is shown a third embodiment of the invention where the user station may not include its own processing system. In this embodiment, the user remotely accesses the processing unit 56, for example through a web connection. The ID code is generated 10 directly on the processing unit, and is therefore automatically made accessible thereto without the use of an e-mail system. In this embodiment, the user signature file is secured 30 and stored 25 directly on the processing unit.

### Description of a system according to a preferred embodiment of the invention

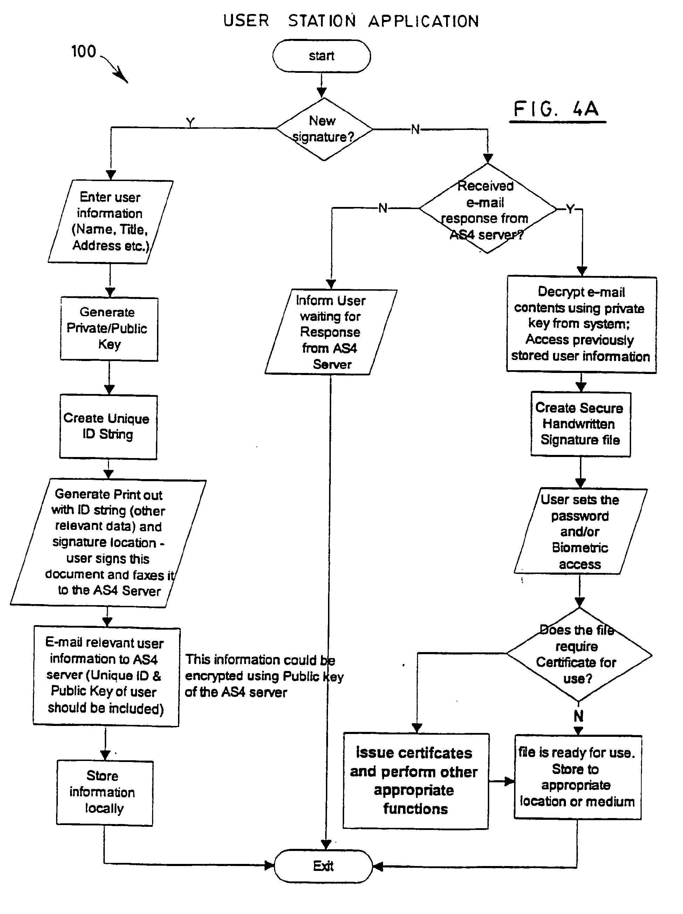

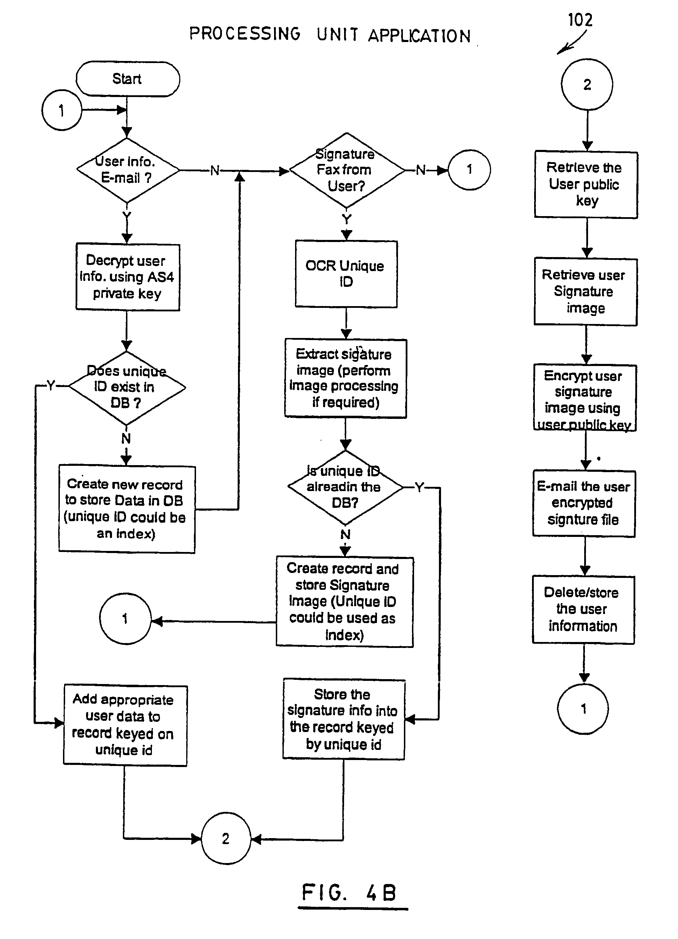

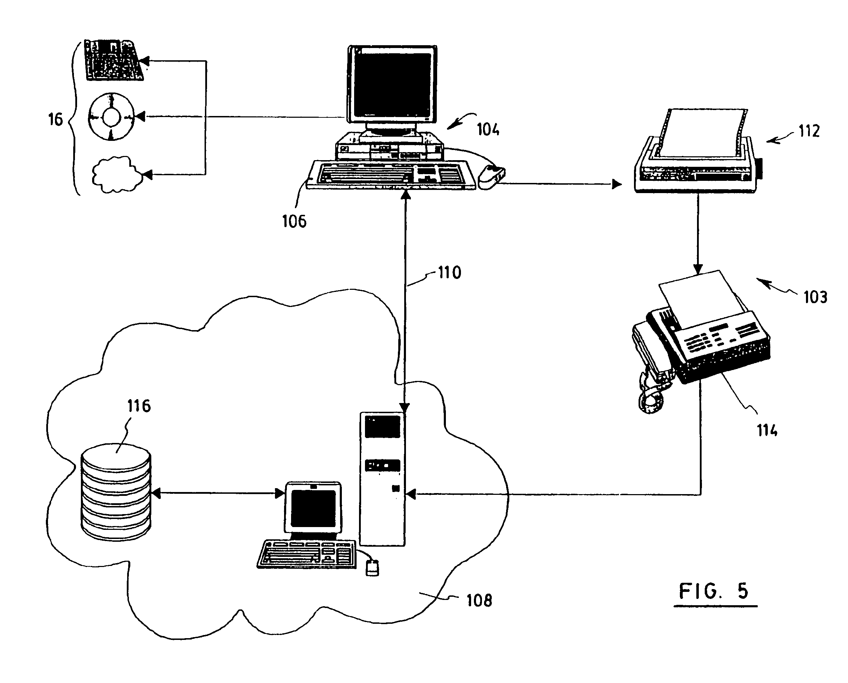

Referring to FiGs. 4A, 4B and 5, there is shown the characteristics of a system 103 for generating a secure electronic signature file according to a preferred embodiment of the invention.

In this embodiment, the user runs or downloads a user station application on his or her user computer system, preferably embodied by station 104. Alternatively, a terminal may be provided with a web connection to remotely access the processing unit which runs a single signature creation application.

In the present embodiment, the station 104 preferably include a data entry device such as keyboard 106 with which the user may enter user identification data such as his name, address, title, any other relevant information deemed necessary.

The system 103 according to the present invention includes a code generating application, preferably as a subroutine of the general user station application. The code generating application generates an ID code associated with the user and makes it available to a processing unit 108. As previously mentioned, the ID code is preferably a bar code but can be embodied by any appropriate means of identification. To make the ID code available to the processing unit, an e-mail system 110 allowing the exchange of e-mail messages between the user station 104 and the processing unit 108 is preferably provided.

Preferably, the system 103 includes a key generating application for generating a public/private key pair, which may also be included in the user station application 100. Means for making the public key accessible to the processing unit 108 are also provided, and are preferably embodied by e-mail system 110. The e-mail system is therefore adapted to provide an e-mail message containing the ID code and public key and send this message to the processing unit 108. In this embodiment, an encrypting application is provided for encrypting the e-mail message. The encrypting portion of this application is preferably included in the user station application 100 while the decrypting portion is part of the processing unit application 102.

The system 103 further includes a printer 112 for generating a printed template. The printed template has at least the ID code thereon, but may also include a predetermined signature location and some or all of the user identification data. The system 103 further includes a transmitter for transmitting the template to the remote processing unit 108, preferably embodied by fax machine 114.

At the processing unit 108, matching means are provided for matching the ID code on the template to the one transmitted via e-mail. These means preferably comprise an OCR application for recognizing the ID code on the template, and a matching application for comparing and matching the two ID codes. Preferably, the OCR and matching applications are part of the more general processing unit application 102.

The system 103 also includes a digitizer for digitizing the user signature sample on the template received at the processing unit 108 and storing it into a user signature image file. The digitizer is preferably integral to the processing unit application 102, and may include a second OCR application for recognizing the user signature sample and an image processing application.

The system 103 finally includes securing means for securing the electronic signature file in such a manner that only the user has access thereto. Various embodiments of such securing means are considered, such as applications for encrypting, assigning passwords or restricting access to biometric characteristics. Any of those applications, by themselves or combined, may be included in either of the user station application 100 or processing unit application 102. Preferably, an electronic transmitter such as e-mail system 110 is provided for transmitting the electronic signature file from the processing unit 108 to the user station 104, before or after encryption thereof. The secure electronic signature file may be stored in various storing devices 116, such as the user's hard drive, the web, a network, floppy disks, PCMCIA cards, CD ROMs, magnetic strips, smart cards, etc.

### Example of user station and processing unit applications

Referring to FIGs. 4A and 4B, there is shown an example of user station and processing unit applications according to a preferred embodiment of the invention.

The following steps are first performed at the user station:
1. The user runs or downloads a user station application 100 on his user system;
2. The user enters personal information such as name, address, title, and any other pertinent information deemed necessary in the implementation;
3. The user station application generates a private/public key pair on the user system;
4. The user station application generates a unique ID (UID) string to identify the user and user data;
5. The user station application prints out a template that contains the unique ID string, any other pertinent information (this information could be printed in normal text, encrypted text or bar codes or any other format that is best suited for scanning and retrieving using OCR) and a predetermined location for the user to enter his signature;
6. The user signs the template and then faxes it to a given number;
7. The user station application generates an e-mail message (this message can be optionally encrypted) and sends it to the fax server. This electronic or e-mail message also contains the public key from the user and the unique ID string that was printed, and any additional required information;
8. The user station application stores the current user information until a reply from the automated secure signature scanning system (hereinafter AS4) server is received.

At the AS4 fax server, the processing unit application 102 performs the following steps:
1. The AS4 server receives the e-mail from a user station application;
2. If the message is encrypted it is decrypted;
3. The information contained in the e-mail is entered into a database or stored in a fashion such that it can be accessed by the processing unit application;
4. The faxed template containing the signature is received by the AS4 server. The server optically recognizes the unique ID string (i.e. through OCR) and retrieves the stored data for this user using the Unique ID as the key. It is possible to use other information such as a name to retrieve the user data.
5. The signature is then extracted from the faxed image;
6. The extracted signature image and other relevant data are merged together and encrypted using the public key of the user, and e-mailed back to the user (optionally the encryption step can be omitted, however this is not recommended);
7. The server deletes all references to the files from the database or, alternatively, stores the information in the database. Optionally, the information could be encrypted using the user's public key and stored, in such cases, only the user with access to the private key will be able to access the data. (For instance, if the user needs the file to be regenerated, it could be e-mailed back to the user and it can be extracted on the user system using the private key).

Back at the user station, the user station application performs the following steps:
1. The e-mail from the AS4 server, upon reception, is decrypted using the private key stored on the system.
2. The electronic hand-written file can then be generated to be used within signing applications.

Optional features that can be incorporated in this system are the following:

A certificate authority system can be configured so that the secure electronic hand-written signature cannot be used unless it has been validated by a certificate authority.

The secure electronic hand-written signature cannot be used until the user assigns a password or changes the password set by the system.

The password or access to the signature file can be controlled using biometrics, in additions to a password.

A database of valid signatures can be maintained, and the signing applications can verify the validity of the signatures against this database before allowing the users to sign using their signatures files. This database can also be used to revoke an issued signature.

A database can be maintained on the server to validate the signature creation requests. For example, a company can have its employee list on this database, so that when the server receives requests via e-mail or fax, it validates the requests with the employee list in the database and only allows the creation of the files if the person mailing the request is to create a file. Certificates could also be issued using this system.

As mentioned earlier, the users can store the secure electronic hand-written signatures on the web, network, floppy disks, PCMCIA cards, CD ROMS or on magnetic stripes or CD ROM cards or any other storage device available.

The entire signature file creation can also be done on the server side only. In the above mentioned description, the image of the signature is e-mailed back and the final secure electronic hand-written signature is generated at the user side. This process could be done on the server and then e-mailed back to the end user, provided the server is large enough.

It should be noted that the method of the above example may be implemented as an event driven process, such that for example when a fax is received by the server, it will initiate the method described. In a similar fashion, when an e-mail is received by the user station application, the method to create the signature could be initiated.

Of course, numerous changes could be made to the preferred embodiment disclosed hereinabove without departing from the scope of the invention as defined in the appended claims.

## Claims

1. A method for generating a secure digitized hand written signature file for a user, comprising the steps of:
a) generating (10) an ID code associated with the user, said ID code being made accessible to a processing unit remote from said user;
b) generating (14) a printed template having the ID code thereon;
c) having the user sign (16) the template, thereby generating a user hand written signature sample;
d) transmitting (18) the template to the processing unit;
e) matching (22) the ID code on the template received at the processing unit to the ID code made accessible to said processing unit in step a);
f) digitizing (24) the user hand written signature sample on the template received at the processing unit and storing said user hand written signature sample into an digitized hand written signature file; and
g) securing (30) the digitized hand written signature file in such a manner that only the user has access thereto.

2. A method according to claim 1, wherein the transmitting of step d) comprises using a fax machine (114).

3. A method according to claim 1, wherein the securing (30) of step g) comprises encrypting said digitized hand written signature file.

4. A method according to claim 1, wherein the securing (30) of step g) comprises assigning a password limited access to said digitized hand written signature file.

5. A method according to claim 1, wherein the securing (30) of step g) comprises restricting access to said digitized hand written signature file through biometric characteristics of the user.

6. A method according to claim 1, further comprising an additional step after step g) of storing (32) the secure digitized hand written signature file in a location chosen from the group (116) consisting of a user hard drive, the web, a network, floppy disks, PCMCIA cards, CD ROMs, magnetic strips and smart cards.

7. A method according to claim 1, wherein:
step a) further comprises generating (36) a public and private key pair associated with the user, the public key being made accessible to the processing unit; and
the securing (30) of step g) comprises encrypting (46) the digitized hand written signature file using the public key, said digitized hand written signature file being decryptable (38) using the private key.

8. A method according to claim 7, wherein step a) comprises the substeps of:
i) generating (12) an e-mail message containing the public key and ID code; and
ii) sending (46) said e-mail message to the processing unit, thereby making the ID code and public key accessible thereto.

9. A method according to claim 8, wherein:
step a) comprises an additional step between substeps a)i) and a)ii) of encrypting (46) the e-mail message; and
the method comprises an additional step before step e) of decrypting (48) said e-mail message upon reception thereof by the processing unit.

10. A method according to claim 8, comprising an additional step between step f) and step g) of transmitting (26) the digitized hand written signature file to the user.

11. A method according to claim 10, comprising a further additional step between step f) and step g) of deleting (25) the ID code and digitized hand written signature file from the processing unit after transmission (26) of said digitized hand written signature file to the user.

12. A method according to claim 8, comprising an additional step after step g) of transmitting (26) the digitized hand written signature file to the user.

13. A method according to claim 12, comprising a further additional step after step g) of deleting (25) the ID code and digitized hand written signature file from the processing unit after transmission (26) of said digitized hand written signature file to the user.

14. A method according to claim 1, further comprising an additional step before step a) of remotely accessing (56) the processing unit.

15. A method according to claim 14, wherein the remote accessing (56) of the processing unit is done through the web.

16. A method according to claim 1, wherein the template generated (14) in step b) includes a predetermined signature location for receiving the user hand written signature sample.

17. A method according to claim 1, further comprising a step before step a) of providing (34) user identification data.

18. A method according to claim 17, wherein said user identification data includes the name of the user.

19. A method according to claim 17, wherein step b) includes printing (34) the user identification data on the template.

20. A method according to claim 1, wherein the ID code is a bar code.

21. A method according to claim 1, further comprising a step before step e) of optically recognizing (52) the ID code.

22. A method according to claim 1, comprising an additional step between steps e) and f) of verifying if the user is authorized to have a secure digitized hand written signature file, and proceeding only if so.

23. A system (103) for generating a secure digitized hand written signature file for a user, comprising:
a code generating application (100) for generating an ID code associated with said user, and making said ID code accessible to a processing unit (108) remote from said user;
a printer (112) for generating a printed template having the ID code thereon, said template being signable by the user for generating a user hand written signature sample;
a transmitter (114) for transmitting the template to the remote processing unit;
matching means (102) for matching the ID code on the template received at the processing unit to the ID code made accessible thereto;
a digitizer (102) for digitizing the user hand written signature sample on the template received at the processing unit and storing it into a user signature image file; and
securing means (102) for securing the digitized hand written signature file in such a manner that only the user has access thereto.

24. A system (103) according to claim 23, wherein the transmitter comprises a fax machine (114).

25. A system (103) according to claim 23, wherein the securing means (102) comprise an encrypting application for encrypting the digitized hand written signature file.

26. A system (103) according to claim 23, wherein the securing means (102) comprise password assigning application for assigning a password limited access to said digitized hand written signature file.

27. A system (103) according to claim 23, wherein the securing means (102) comprise an application for restricting access to said digitized hand written signature file through biometric characteristics of the user.

28. A system (103) according to claim 23, further comprising a storing device (116) for storing the secure digitized hand written signature file, said storing device being chosen from the group consisting of a user hard drive, the web, a network, floppy disks, PCMCIA cards, CD ROMs, magnetic strips and smart cards.

29. A system (103) according to claim 23, further comprising:
a key generating application (100) for generating a public and private key pair associated with the user; and
means for making the public key accessible to the processing unit;
the securing means (102) comprising an encrypting application for encrypting the digitized hand written signature file using the public key, in such a manner that said digitized hand written signature file is decryptable using the private key.

30. A system (103) according to claim 29, wherein the means for making the public key accessible to the processing unit comprise an e-mail system for generating an e-mail message containing the public key and ID code and sending said e-mail message to the processing unit.

31. A system (103) according to claim 30, comprising a further encrypting application (100) for encrypting the e-mail message at a user location and decrypting (102) said e-mail message at the processing unit.

32. A system (103) according to claim 30, further comprising an electronic transmitter for transmitting the digitized hand written signature file from the processing unit to the user.

33. A system (103) according to claim 23, further comprising accessing means for remotely accessing the processing unit.

34. A system (103) according to claim 33, wherein the accessing means comprise a web connection.

35. A system (103) according to claim 23, wherein the template includes a predetermined signature location for receiving the user hand written signature sample.

36. A system (103) according to claim 23, further comprising a data entry device for providing user identification data.

37. A system (103) according to claim 36, wherein said user identification data includes the name of the user.

38. A system (103) according to claim 36, wherein the user identification data is printed on the template.

39. A system (103) according to claim 23, wherein the ID code is a bar code.

40. A system (103) according to claim 23, wherein the matching means comprise an OCR application for recognizing the ID code on the template.

41. A system (103) according to claim 23, wherein the digitizer comprises an OCR application for recognizing the user hand written signature sample on the template, and an image processing application for processing said user hand written signature sample.

## Patentansprüche

1. Verfahren zum Erzeugen einer sicheren Datei mit digitalisierter handschriftlicher Unterschrift für einen Benutzer, folgende Schritte umfassend:
a) Erzeugen (10) eines ID-Codes, der dem Benutzer zugeordnet ist, wobei der ID-Code einer Verarbeitungseinheit zugänglich gemacht wird, die vom Benutzer entfernt ist,
b) Erzeugen (14) einer gedruckten Vorlage, die den ID-Code darauf aufweist,
c) Unterzeichnenlassen (16) der Vorlage durch den Benutzer, wodurch ein Muster der handschriftlichen Unterschrift des Benutzers erzeugt wird,
d) Senden (18) der Vorlage zur Verarbeitungseinheit,
e) Abgleichen (22) des ID-Codes auf der Vorlage, die an der Verarbeitungseinheit empfangen wurde, mit dem ID-Code, welcher der Verarbeitungseinheit in Schritt a) zugänglich gemacht wurde,
f) Digitalisieren (24) des auf der Vorlage, die an der Verarbeitungseinheit empfangen wurde, befindlichen Musters der handschriftlichen Unterschrift des Benutzers und Speichern des Musters der handschriftlichen Unterschrift des Benutzers in eine Datei mit digitalisierter handschriftlicher Unterschrift und
g) Sichern (30) der Datei mit digitalisierter handschriftlicher Unterschrift in derartiger Art und Weise, daß nur der Benutzer Zugriff darauf hat.

2. Verfahren nach Anspruch 1, wobei das Senden nach Schritt d) das Verwenden eines Faxgeräts (114) umfaßt.

3. Verfahren nach Anspruch 1, wobei das Sichern (30) nach Schritt g) das Verschlüsseln der Datei mit digitalisierter handschriftlicher Unterschrift umfaßt.

4. Verfahren nach Anspruch 1, wobei das Sichern (30) nach Schritt g) das Zuweisen eines kennwortbeschränkten Zugriffs auf die Datei mit digitalisierter handschriftlicher Unterschrift umfaßt.

5. Verfahren nach Anspruch 1, wobei das Sichern (30) nach Schritt g) das Beschränken des Zugriffs auf die Datei mit digitalisierter handschriftlicher Unterschrift durch biometrische Merkmale des Benutzers umfaßt.

6. Verfahren nach Anspruch 1, das ferner nach Schritt g) einen zusätzlichen Schritt des Speicherns (32) der sicheren Datei mit digitalisierter handschriftlicher Unterschrift an einem Speicherort umfaßt, der aus der Gruppe (116) gewählt ist, die aus einer Festplatte des Benutzers, dem Internet, einem Netzwerk, Disketten, PCMCIA-Karten, CDs, Magnetstreifen und Smartcards besteht.

7. Verfahren nach Anspruch 1, wobei:
Schritt a) ferner das Erzeugen (36) eines Paares aus öffentlichem und privatem Schlüssel umfaßt, das dem Benutzer zugeordnet ist, wobei der öffentliche Schlüssel der Verarbeitungseinheit zugänglich gemacht wird, und
das Sichern (30) nach Schritt g) das Verschlüsseln (46) der Datei mit digitalisierter handschriftlicher Unterschrift unter Verwendung des öffentlichen Schlüssels umfaßt, wobei die Datei mit digitalisierter handschriftlicher Unterschrift unter Verwendung des privaten Schlüssels entschlüsselbar (38) ist.

8. Verfahren nach Anspruch 7, wobei Schritt a) die folgenden Unterschritte umfaßt:
i) Erzeugen (12) einer E-Mail-Nachricht, die den öffentlichen Schlüssel und den ID-Code enthält, und
ii) Senden (46) der E-Mail-Nachricht zur Verarbeitungseinheit, wodurch der ID-Code und der öffentliche Schlüssel dieser zugänglich gemacht werden.

9. Verfahren nach Anspruch 8, wobei:
Schritt a) zwischen den Unterschritten a)i) und a)ii) einen zusätzlichen Schritt des Verschlüsselns (46) der E-Mail-Nachricht umfaßt und
das Verfahren vor Schritt e) einen zusätzlichen Schritt des Entschlüsselns (48) der E-Mail-Nachricht bei Empfang derselben durch die Verarbeitungseinheit umfaßt.

10. Verfahren nach Anspruch 8, das zwischen Schritt f) und Schritt g) einen zusätzlichen Schritt des Sendens (26) der Datei mit digitalisierter handschriftlicher Unterschrift zum Benutzer umfaßt.

11. Verfahren nach Anspruch 10, das zwischen Schritt f) und Schritt g) einen weiteren zusätzlichen Schritt des Löschens (25) des ID-Codes und der Datei mit digitalisierter handschriftlicher Unterschrift aus der Verarbeitungseinheit nach Sendung (26) der Datei mit digitalisierter handschriftlicher Unterschrift zum Benutzer umfaßt.

12. Verfahren nach Anspruch 8, das nach Schritt g) einen zusätzlichen Schritt des Sendens (26) der Datei mit digitalisierter handschriftlicher Unterschrift zum Benutzer umfaßt.

13. Verfahren nach Anspruch 12, das nach Schritt g) einen weiteren zusätzlichen Schritt des Löschens (25) des ID-Codes und der Datei mit digitalisierter handschriftlicher Unterschrift aus der Verarbeitungseinheit nach Sendung (26) der Datei mit digitalisierter handschriftlicher Unterschrift zum Benutzer umfaßt.

14. Verfahren nach Anspruch 1, das ferner vor Schritt a) einen zusätzlichen Schritt des Fernzugreifens (56) auf die Verarbeitungseinheit umfaßt.

15. Verfahren nach Anspruch 14, wobei das Fernzugreifen (56) auf die Verarbeitungseinheit über das Internet erfolgt.

16. Verfahren nach Anspruch 1, wobei die in Schritt b) erzeugte (14) Vorlage einen vorgegebenen Unterschriftenplatz zum Aufnehmen des Musters der handschriftlichen Unterschrift des Benutzers beinhaltet.

17. Verfahren nach Anspruch 1, das ferner vor Schritt a) einen Schritt des Bereitstellens (34) von Benutzeridentifikationsdaten umfaßt.

18. Verfahren nach Anspruch 17, wobei die Benutzeridentifikationsdaten den Namen des Benutzers beinhalten.

19. Verfahren nach Anspruch 17, wobei Schritt b) das Drucken (34) der Benutzeridentifikationsdaten auf der Vorlage beinhaltet.

20. Verfahren nach Anspruch 1, wobei der ID-Code ein Strichcode ist.

21. Verfahren nach Anspruch 1, das ferner vor Schritt e) einen Schritt des optischen Erkennens (52) des ID-Codes umfaßt.

22. Verfahren nach Anspruch 1, das zwischen den Schritten e) und f) einen zusätzlichen Schritt des Überprüfens umfaßt, ob der Benutzer berechtigt ist, eine sichere Datei mit digitalisierter handschriftlicher Unterschrift zu haben, und wobei nur fortgefahren wird, wenn dies so ist.

23. System (103) zum Erzeugen einer sicheren Datei mit digitalisierter handschriftlicher Unterschrift für einen Benutzer, umfassend:
eine codeerzeugende Anwendung (100) zum Erzeugen eines ID-Codes, der dem Benutzer zugeordnet ist, und Zugänglichmachen des ID-Codes für eine Verarbeitungseinheit (108), die vom Benutzer entfernt ist;
einen Drucker (112) zum Erzeugen einer gedruckten Vorlage, die den ID-Code darauf aufweist, wobei die Vorlage durch den Benutzer unterschreibbar ist, um ein Muster der handschriftlichen Unterschrift des Benutzers zu erzeugen;
einen Sender (114) zum Senden der Vorlage zur entfernten Verarbeitungseinheit;
Abgleichmittel (102) zum Abgleichen des ID-Codes auf der Vorlage, die an der Verarbeitungseinheit empfangen wurde, mit dem ID-Code, welcher dieser zugänglich gemacht wurde;
einen Digitalisierer (102) zum Digitalisieren des Musters der handschriftlichen Unterschrift des Benutzers auf der Vorlage, die an der Verarbeitungseinheit empfangen wurde, und Speichern desselben in eine Grafikdatei mit Unterschrift des Benutzers; und
Sicherungsmittel (102) zum Sichern der Datei mit digitalisierter handschriftlicher Unterschrift in derartiger Art und Weise, daß nur der Benutzer Zugriff darauf hat.

24. System (103) nach Anspruch 23, wobei der Sender ein Faxgerät (114) umfaßt.

25. System (103) nach Anspruch 23, wobei die Sicherungsmittel (102) eine Verschlüsselungsanwendung zum Verschlüsseln der Datei mit digitalisierter handschriftlicher Unterschrift umfassen.

26. System (103) nach Anspruch 23, wobei die Sicherungsmittel (102) eine Kennwortzuweisungsanwendung zum Zuweisen eines kennwortbeschränkten Zugriffs auf die Datei mit digitalisierter handschriftlicher Unterschrift umfassen.

27. System (103) nach Anspruch 23, wobei die Sicherungsmittel (102) eine Anwendung zum Beschränken des Zugriffs auf die Datei mit digitalisierter handschriftlicher Unterschrift durch biometrische Merkmale des Benutzers umfassen.

28. System (103) nach Anspruch 23, das ferner ein Speichergerät (116) zum Speichern der sicheren Datei mit digitalisierter handschriftlicher Unterschrift umfaßt, wobei das Speichergerät aus der Gruppe gewählt ist, die aus einer Festplatte des Benutzers, dem Internet, einem Netzwerk, Disketten, PCMCIA-Karten, CDs, Magnetstreifen und Smartcards besteht.

29. System (103) nach Anspruch 23, ferner umfassend:
eine schlüsselerzeugende Anwendung (100) zum Erzeugen eines Paares aus öffentlichem und privatem Schlüssel, das dem Benutzer zugeordnet ist; und
Mittel zum Zugänglichmachen des öffentlichen Schlüssels für die Verarbeitungseinheit,
wobei die Sicherungsmittel (102) eine Verschlüsselungsanwendung zum Verschlüsseln der Datei mit digitalisierter handschriftlicher Unterschrift unter Verwendung des öffentlichen Schlüssels in derartiger Art und Weise umfassen, daß die Datei mit digitalisierter handschriftlicher Unterschrift unter Verwendung des privaten Schlüssels entschlüsselbar ist.

30. System (103) nach Anspruch 29, wobei die Mittel zum Zugänglichmachen des öffentlichen Schlüssels für die Verarbeitungseinheit ein E-Mail-System zum Erzeugen einer E-Mail-Nachricht, welche den öffentlichen Schlüssel und den ID-Code enthält, und zum Senden der E-Mail-Nachricht zur Verarbeitungseinheit umfassen.

31. System (103) nach Anspruch 30, ferner eine weitere Verschlüsselungsanwendung (100) zum Verschlüsseln der E-Mail-Nachricht an einem Benutzerstandort und zum Entschlüsseln (102) der E-Mail-Nachricht an der Verarbeitungseinheit umfassend.

32. System (103) nach Anspruch 30, das ferner einen elektronischen Sender zum Senden der Datei mit digitalisierter handschriftlicher Unterschrift von der Verarbeitungseinheit zum Benutzer umfaßt.

33. System (103) nach Anspruch 23, ferner Zugriffsmittel zum Fernzugreifen auf die Verarbeitungseinheit umfassend.

34. System (103) nach Anspruch 33, wobei die Zugriffsmittel eine Internetverbindung umfassen.

35. System (103) nach Anspruch 23, wobei die Vorlage einen vorgegebenen Unterschriftenplatz zum Aufnehmen des Musters der handschriftlichen Unterschrift des Benutzers beinhaltet.

36. System (103) nach Anspruch 23, ferner ein Dateneingabegerät zum Bereitstellen von Benutzeridentifikationsdaten umfassend.

37. System (103) nach Anspruch 36, wobei die Benutzeridentifikationsdaten den Namen des Benutzers beinhalten.

38. System (103) nach Anspruch 36, wobei die Benutzeridentifikationsdaten auf der Vorlage gedruckt sind.

39. System (103) nach Anspruch 23, wobei der ID-Code ein Strichcode ist.

40. System (103) nach Anspruch 23, wobei die Abgleichmittel eine OCR-Anwendung zum Erkennen des ID-Codes auf der Vorlage umfassen.

41. System (103) nach Anspruch 23, wobei der Digitalisierer eine OCR-Anwendung zum Erkennen des Musters der handschriftlichen Unterschrift des Benutzers auf der Vorlage und eine Bildverarbeitungsanwendung zum Verarbeiten des Musters der handschriftlichen Unterschrift des Benutzers umfaßt.

## Revendications

1. Procédé de génération d'un fichier sécurisé de signatures manuscrites numérisées pour un utilisateur, comprenant les étapes :
a) de génération (10) d'un code d'identification (ID) associé à l'utilisateur, ledit code d'ID étant rendu accessible à une unité de traitement distante dudit utilisateur ;
b) de génération (14) d'un modèle imprimé portant sur lui le code d'ID ;
c) de signature (16) du modèle par l'utilisateur, en engendrant ainsi un échantillon de signature manuscrite de l'utilisateur ;
d) de transmission (18) du modèle à l'unité de traitement ;
e) de comparaison (22) du code d'ID sur le modèle reçu au niveau de l'unité de traitement avec le code d'ID rendu accessible à ladite unité de traitement à l'étape a) ;
f) de numérisation (24) de l'échantillon de signature manuscrite de l'utilisateur sur le modèle reçu au niveau de l'unité de traitement et de mémorisation dudit échantillon de signature manuscrite de l'utilisateur dans un fichier de signatures manuscrites numérisées ; et
g) de sécurisation (30) du fichier de signatures manuscrites numérisées de telle manière que seul l'utilisateur y ait accès.

2. Procédé selon la revendication 1, dans lequel la transmission de l'étape d) comprend l'utilisation d'un télécopieur (114).

3. Procédé selon la revendication 1, dans lequel la sécurisation (30) de l'étape g) comprend le cryptage dudit fichier de signatures manuscrites numérisées.

4. Procédé selon la revendication 1, dans lequel la sécurisation (30) de l'étape g) comprend l'affectation d'un accès limité par mot de passe audit fichier de signatures manuscrites numérisées.

5. Procédé selon la revendication 1, dans lequel la sécurisation (30) de l'étape g) comprend la limitation d'accès audit fichier de signatures manuscrites numérisées au moyen de caractéristiques biométriques de l'utilisateur.

6. Procédé selon la revendication 1, comprenant en outre, après l'étape g), une étape supplémentaire consistant à mémoriser (32) le fichier sécurisé de signatures manuscrites numérisées dans un emplacement choisi à partir du groupe (116) constitué d'un lecteur de disque dur de l'utilisateur, du Web, d'un réseau, de disquettes, de cartes de l'association internationale pour carte-mémoires d'ordinateurs personnels (PCMCIA pour "Personal Computer Memory Card International Association"), de CD-ROMs, de feuillets magnétiques et de cartes à microprocesseur.

7. Procédé selon la revendication 1,
dans lequel l'étape a) comprend en outre la génération (36) d'une paire de clés publique et privée associée à l'utilisateur, la clé publique étant rendue accessible à l'unité de traitement ; et
dans lequel la sécurisation (30) de l'étape g) comprend le cryptage (46) du fichier de signatures manuscrites numérisées en utilisant la clé publique, ledit fichier de signatures manuscrites numérisées étant décryptable (38) en utilisant la clé privée.

8. Procédé selon la revendication 7, dans lequel l'étape a) comprend les sous-étapes :
i) de génération (12) d'un message de courrier électronique contenant la clé publique et le code d'ID ; et
ii) d'envoi (46) dudit message de courrier électronique à l'unité de traitement, en lui rendant ainsi accessibles le code d'ID et la clé publique.

9. Procédé selon la revendication 8,
dans lequel l'étape a) comprend, entre les sous-étapes a)i) et a)ii), une étape supplémentaire consistant à crypter (46) le message de courrier électronique ; et
dans lequel le procédé comprend, avant l'étape e), une étape supplémentaire consistant à décrypter (48) ledit message de courrier électronique à réception de celui-ci par l'unité de traitement.

10. Procédé selon la revendication 8, comprenant, entre l'étape f) et l'étape g), une étape supplémentaire consistant à transmettre (26) à l'utilisateur le fichier de signatures manuscrites numérisées.

11. Procédé selon la revendication 10, comprenant, entre l'étape f) et l'étape g), une autre étape supplémentaire consistant à supprimer (25) de l'unité de traitement le code d'ID et le fichier de signatures manuscrites numérisées, après transmission (26), à l'utilisateur, dudit fichier de signatures manuscrites numérisées.

12. Procédé selon la revendication 8, comprenant, après l'étape g), une étape supplémentaire consistant à transmettre (26) à l'utilisateur le fichier de signatures manuscrites numérisées.

13. Procédé selon la revendication 12, comprenant, après l'étape g), une autre étape supplémentaire consistant à supprimer (25) de l'unité de traitement le code d'ID et le fichier de signatures manuscrites numérisées, après transmission (26), à l'utilisateur, dudit fichier de signatures manuscrites numérisées.

14. Procédé selon la revendication 1, comprenant en outre, avant l'étape a), une étape supplémentaire consistant à accéder à distance (56) à l'unité de traitement.

15. Procédé selon la revendication 14, dans lequel l'accès à distance (56) à l'unité de traitement se fait par l'intermédiaire du Web.

16. Procédé selon la revendication 1, dans lequel le modèle engendré (14) à l'étape b) inclut un emplacement prédéterminé de signature destiné à recevoir l'échantillon de signature manuscrite de l'utilisateur.

17. Procédé selon la revendication 1, comprenant en outre, avant l'étape a), une étape consistant à fournir (34) des données d'identification de l'utilisateur.

18. Procédé selon la revendication 17, dans lequel lesdites données d'identification de l'utilisateur incluent le nom de l'utilisateur.

19. La procédé selon la revendication 17, dans lequel l'étape b) inclut l'impression (34), sur le modèle, des données d'identification de l'utilisateur.

20. Procédé selon la revendication 1, dans lequel le code d'ID est un code à barres.

21. Procédé selon la revendication 1, comprenant en outre, avant l'étape e), une étape consistant à reconnaître optiquement (52) le code d'ID.

22. Procédé selon la revendication 1, comprenant en outre, entre les étapes e) et f), une étape supplémentaire consistant à vérifier si l'utilisateur est autorisé à avoir un fichier sécurisé de signatures manuscrites numérisées, et à continuer seulement s'il en est ainsi.

23. Système (103) destiné à engendrer un fichier sécurisé de signatures manuscrites numérisées pour un utilisateur, comprenant :
une application (100) génératrice de code destinée à engendrer un code d'ID associé audit utilisateur, et à rendre ledit code d'ID accessible à une unité (108) de traitement distante dudit utilisateur ;
une imprimante (112) destinée à engendrer un modèle imprimé portant sur lui le code d'ID, ledit modèle pouvant être signé par l'utilisateur pour engendrer un échantillon de signature manuscrite de l'utilisateur ;
un émetteur (114) destiné à transmettre le modèle à l'unité de traitement distante ;
un moyen (102) de comparaison destiné à comparer le code d'ID sur le modèle reçu au niveau de l'unité de traitement au code d'ID qui lui est rendu accessible ;
un numériseur (102) destiné à numériser l'échantillon de signature manuscrite de l'utilisateur sur le modèle reçu au niveau de l'unité de traitement et à le mémoriser dans un fichier d'images de signature d'utilisateur ; et
un moyen (102) de sécurisation destiné à sécuriser le fichier de signatures manuscrites numérisées de telle manière que seul l'utilisateur y ait accès.

24. Système (103) selon la revendication 23, dans lequel l'émetteur comprend un télécopieur (114).

25. Système (103) selon la revendication 23, dans lequel le moyen (102) de sécurisation comprend une application de cryptage destinée à crypter le fichier de signatures manuscrites numérisées.

26. Système (103) selon la revendication 23, dans lequel le moyen (102) de sécurisation comprend une application d'affectation de mot de passe destinée à affecter un accès limité par mot de passe audit fichier de signatures manuscrites numérisées.

27. Système (103) selon la revendication 23, dans lequel le moyen (102) de sécurisation comprend une application destinée à limiter l'accès audit fichier de signatures manuscrites numérisées au moyen de caractéristiques biométriques de l'utilisateur.

28. Système (103) selon la revendication 23, comprenant en outre un dispositif (116) de mémorisation destiné à mémoriser le fichier sécurisé de signatures manuscrites numérisées, ledit dispositif de mémorisation étant choisi à partir du groupe constitué d'un lecteur de disque dur de l'utilisateur, du Web, d'un réseau, de disquettes, de cartes de la PCMCIA, de CD-ROMs, de feuillets magnétiques et de cartes à microprocesseur.

29. Système (103) selon la revendication 23, comprenant en outre :
une application (100) génératrice de clés destinée à engendrer une paire de clés publique et privée associée à l'utilisateur ; et
un moyen destiné à rendre la clé publique accessible à l'unité de traitement ;
le moyen (102) de sécurisation comprenant une application de cryptage destinée à crypter le fichier de signatures manuscrites numérisées en utilisant la clé publique, de telle manière que ledit fichier de signatures manuscrites numérisées soit décryptable en utilisant la clé privée.

30. Système (103) selon la revendication 29, dans lequel le moyen destiné à rendre la clé publique accessible à l'unité de traitement comprend un système de courrier électronique pour engendrer un message de courrier électronique contenant la clé publique et le code d'ID et pour envoyer ledit message de courrier électronique à l'unité de traitement.

31. Système (103) selon la revendication 30, comprenant une application (100) de cryptage supplémentaire destinée à crypter le message de courrier électronique au niveau de la localisation de l'utilisateur et à décrypter (102) ledit message électronique au niveau de l'unité de traitement.

32. Système (103) selon la revendication 30, comprenant en outre un émetteur électronique destiné à transmettre, de l'unité de traitement à l'utilisateur, le fichier de signatures manuscrites numérisées.

33. Système (103) selon la revendication 23, comprenant en outre un moyen d'accès destiné à accéder à distance à l'unité de traitement.

34. Système (103) selon la revendication 33, dans lequel le moyen d'accès comprend une connexion au Web.

35. Système (103) selon la revendication 23, dans lequel le modèle inclut un emplacement prédéterminé de signature destiné à recevoir l'échantillon de signature manuscrite de l'utilisateur.

36. Système (103) selon la revendication 23, comprenant en outre un dispositif d'entrée de données destiné à fournir des données d'identification de l'utilisateur.

37. Système (103) selon la revendication 36, dans lequel lesdites données d'identification de l'utilisateur incluent le nom de l'utilisateur.

38. Système (103) selon la revendication 36, dans lequel les données d'identification de l'utilisateur sont imprimées sur le modèle.

39. Système (103) selon la revendication 23, dans lequel le code d'ID est un code à barres.

40. Système (103) selon la revendication 23, dans lequel le moyen de comparaison comprend une application de reconnaissance optique de caractères (OCR pour "Optical Character Recogition") destinée à reconnaître le code d'ID sur le modèle.

41. Système (103) selon la revendication 23, dans lequel le numériseur comprend une application d'OCR destinée à reconnaître l'échantillon de signature manuscrite de l'utilisateur sur le modèle, et une application de traitement d'image destinée à traiter ledit échantillon de signature manuscrite de l'utilisateur.
